Europäisches Patentamt

European Patent Office

Office européen des brevets

(19)

(11) Numéro de publication: **0 381 545**
**A1**

# DEMANDE DE BREVET EUROPEEN

(21) Numéro de dépôt: 90400073.4

(22) Date de dépôt: **10.01.90**

(51) Int. Cl.5: **B65G 65/32**

(30) Priorité: **20.01.89 FR 8900701**

(43) Date de publication de la demande:
**08.08.90 Bulletin 90/32**

(84) Etats contractants désignés:
**BE CH DE DK ES GB IT LI NL SE**

(71) Demandeur: **ERMONT. C.M.**
**Rue Jean-Pierre Timbaud**
**F-42420 Lorette(FR)**

(72) Inventeur: **Marconnet, Guy**
**La Champagnière -Saint Martin La Plaine**
**f-42800 Rive de Gier(FR)**

(74) Mandataire: **Bouget, Lucien et al**
**Cabinet Lavoix 2, Place d'Estienne d'Orves**
**F-75441 Paris Cédex 09(FR)**

(54) **Dispositif d'alimentation d'une pluralité de trémies de stockage en produits granulaires.**

(57) Les trémies de stockage (4, 5) sont disposées suivant au moins deux lignes de chargement (1, 2, 3) parallèles entre elles comprenant chacune au moins deux trémies de stockage (4, 5). Une trémie navette est montée mobile entre une position de remplissage (40) en-dessous de la partie de décharge d'un moyen d'alimentation en produits granulaires (10) et une pluralité de positions de déversement situées chacune au-dessus d'une trémie de stockage (4, 5). Le support et le déplacement de la trémie navette sont assurés par un dispositif du type pont roulant comportant une première voie de roulement (22) disposée suivant la direction des lignes (1, 2, 3), une poutre (23) disposée transversalement au-dessus de l'ensemble des lignes de chargement (1, 2, 3) montée mobile sur la première voie de roulement (22) et une seconde voie de roulement disposée suivant la longueur de la poutre (23) sur laquelle la trémie navette est montée mobile.

FIG.2

## Dispositif d'alimentation d'une pluralité de trémies de stockage en produits granulaires

L'invention concerne un dispositif d'alimentation d'une pluralité de trémies de stockage en produits granulaires et en particulier un dispositif d'alimentation d'un ensemble de trémies de stockage d'une centrale d'enrobage produisant des enrobés bitumineux pour revêtements routiers.

Les centrales d'enrobage destinées à la production d'enrobés bitumineux pour revêtements routiers comportent une installation dans laquelle des produits granulaires tels que des cailloux mélangés à des particules de plus fine granulométrie sont séchés puis revêtus d'une couche de bitume, le produit final constitué par les enrobés étant récupéré à la sortie de l'installation pour être transporté sur le chantier routier ou autoroutier par des camions-bennes.

Les centrales d'enrobage utilisées fréquemment dans la technique actuelle comportent un tamboursécheur-enrobeur à fonctionnement continu produisant des enrobés bitumineux qui sont déversés, à la sortie du tambour, sur un convoyeur incliné assurant le remplissage d'au moins une trémie de stockage sous laquelle les camions de transport viennent se présenter les uns à la suite des autres pour recevoir une charge d'enrobés.

La sortie du tambour est à un niveau sensiblement inférieur au niveau de remplissage de la trémie de stockage qui est montée sur un portique permettant le passage des camions venant se présenter en position de remplissage sous la trémie. Les enrobés bitumineux qui se présentent sous la forme d'un produit granulaire à forte adhésivité doivent en conséquence être transportés par un convoyeur ayant une inclinaison relativement forte, généralement constitué par un convoyeur à raclettes.

A la sortie du convoyeur, les enrobés bitumineux sont déversés dans une trémie intermédiaire appelée trémie anti-ségrégation qui permet d'éviter un tassement et une prise en masse des enrobés dus à la chute de ces enrobés sur une hauteur importante.

Dans le cas où l'on utilise une seule trémie de stockage, les enrobés bitumineux sont déversés directement de la trémie antiségrégation dans la trémie de stockage de manière généralement discontinue.

Dans le cas des centrales d'enrobage à forte production se traduisant par des tonnages horaires importants, il est nécessaire de prévoir plusieurs lignes de chargement et d'approvisionnement des camions et donc plusieurs trémies de stockage dont le remplissage successif est assuré par un moyen de transport intermédiaire entre la trémie antiségrégation et l'extrémité supérieure de remplissage de la trémie de stockage.

On a par exemple proposé de disposer des trémies de stockage l'une à la suite de l'autre sur une seule ligne dont la longueur dépend du nombre de trémies de stockage utilisées.

Une voie de roulement constituée par deux rails fixes est disposée à un niveau situé légèrement au-dessus du niveau supérieur de remplissage des trémies et une trémie navette montée sur un ensemble de roulement tel qu'un chariot circule sur la voie de roulement entre un point de chargement situé à l'aplomb de la trémie antiségrégation à l'extrémité du convoyeur et une pluralité de points de déversement situés chacun à l'aplomb de l'ouverture de remplissage d'une trémie de stockage.

Le remplissage de chacune des trémies de stockage nécessite un certain nombre de déplacements aller et retour de la trémie navette.

Dans le cas de centrales d'enrobage à très grande production, le nombre de trémies de stockage nécessaire au bon fonctionnement de la centrale peut être relativement important si bien que la longueur de la ligne de trémies et du trajet aller et retour de la trémie navette peuvent augmenter considérablement l'encombrement de la centrale d'enrobage et entraîner des complications en ce qui concerne la conduite de l'installation.

On a également proposé de disposer les trémies de stockage suivant deux lignes parallèles dans lesquelles les trémies de stockage présentent des capacités assez sensiblement différentes.

Les extrémités supérieures de remplissage des trémies de stockage disposées suivant l'une et l'autre lignes se trouvent à des niveaux sensiblement différents et il est nécessaire d'utiliser trois trémies navettes pour assurer le transport des enrobés entre le point de chargement et les ouvertures de remplissage des trémies de stockage. Un tel dispositif est d'une grande complexité qui se traduit par des difficultés de mise en oeuvre.

On a également proposé de placer les trémies de stockage suivant deux lignes qui sont desservies par un convoyeur tournant dont une extrémité est alimentée par le convoyeur incliné et dont l'autre extrémité peut être placée successivement à l'aplomb de trémies antiségrégation situées audessus des ouvertures de remplissage de chacune des trémies de stockage.

Le convoyeur intermédiaire est monté pivotant autour d'un axe passant par le point de remplissage. Le convoyeur tournant permet de desservir deux trémies de stockage situées suivant une première ligne de part et d'autre du point de remplissage et deux autres trémies de stockage situées suivant une seconde ligne de remplissage. Les trémies antiségrégation des quatre trémies de stockage constituent la partie supérieure de remplissage de ces trémies et sont situées dans un secteur circulaire qui est décrit par l'extrémité du convoyeur tournant lors de ses déplacements. L'installation comporte une cinquième trémie disposée sur la première ligne, à l'aplomb du point de remplissage, le convoyeur tournant pouvant être déplacé en translation pour permettre le remplissage de cette cinquième trémie.

Cette installation est complexe dans la mesure où elle nécessite l'utilisation d'un convoyeur tournant.

En outre, une telle installation ne comporte que deux lignes de remplissage comportant chacune un nombre limité de trémies.

Le but de l'invention est donc de proposer un dispositif d'alimentation d'une pluralité de trémies de stockage en produits granulaires comportant un moyen d'alimentation en produits granulaires comprenant une partie de décharge située au-dessus du niveau supérieur des trémies de stockage et une trémie navette mobile entre une position de remplissage en-dessous de la partie de décharge du moyen d'alimentation et une pluralité de positions de déversement situées chacune au-dessus d'une trémie de stockage, ce dispositif pouvant comporter un grand nombre de trémies tout en étant d'un encombrement réduit et d'une grande simplicité se traduisant par un prix de revient faible aussi bien que par des coûts de fonctionnement réduits.

Dans ce but :
- les trémies de stockage sont disposées suivant au moins deux lignes de chargement parallèles entre elles comprenant chacune au moins deux trémies de stockage et comportent des ouvertures supérieures de remplissage qui sont toutes placées à un même niveau,
et le dispositif comporte un ensemble de support et de déplacement de la trémie navette du type pont roulant constitué par :
- une première voie de roulement horizontale disposée suivant la direction des lignes de chargement et sensiblement sur toute leur longueur, à un niveau situé au-dessus des ouvertures de remplissage des trémies de stockage,
- une poutre disposée transversalement au-dessus de l'ensemble des lignes de chargement, montée mobile sur la première voie de roulement et comportant des moyens moteurs pour le déplacement longitudinal de la poutre,
- et une seconde voie de roulement disposée sensiblement sur toute la longueur de la poutre sur laquelle la trémie navette est montée mobile grâce à des moyens de roulement et à des moyens moteurs de déplacement transversal.

Afin de bien faire comprendre l'invention, on va maintenant décrire, à titre d'exemple non limitatif, en se référant aux figures jointes en annexe, un mode de réalisation d'un dispositif d'alimentation de trémies suivant l'invention.

La figure 1 est une vue en élévation latérale du dispositif, selon un premier mode de réalisation, dans le cas d'un poste d'enrobage de type continu.

La figure 2 est une vue de dessus du dispositif.

La figure 3 est une vue à plus grande échelle de la partie du dispositif située au-dessus de l'ouverture supérieure de remplissage des trémies de stockage.

La figure 4 est une vue en élévation latérale du dispositif, selon un second mode de réalisation, dans le cas d'un poste d'enrobage de type discontinu.

La figure 5 est une vue de dessus du dispositif suivant 5 de la figure 4.

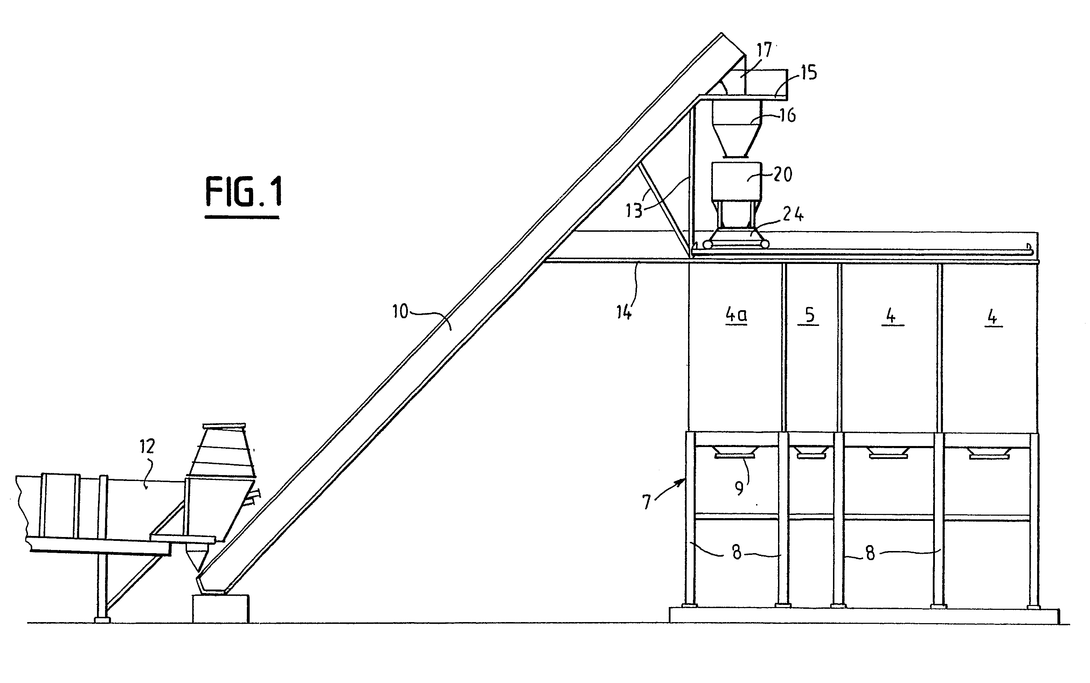

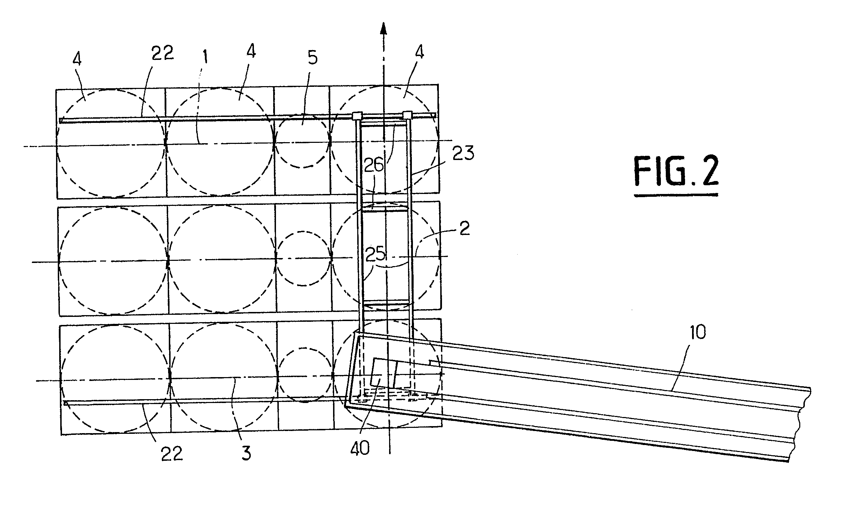

Sur les figures 1 et 2, on voit un dispositif d'alimentation suivant l'invention comportant douze trémies disposées suivant trois lignes de passage de camions 1, 2 et 3.

Chacune des lignes 1, 2 et 3 comporte trois trémies 4 de grande capacité et une trémie 5 dont le diamètre et la capacité sont sensiblement inférieurs au diamètre et à la capacité des trémies 4.

Comme il est visible sur la figure 1, les trémies 4 et 5 comportent des extrémités supérieures par lesquelles on effectue leur remplissage, qui sont toutes situées à un même niveau.

Les trémies 4 et 5 sont montées sur des portiques 7 ayant des colonnes 8 d'une hauteur suffisante pour permettre le passage des camions en-dessous de l'ouverture de déversement 9 des trémies.

L'ensemble des trémies est alimenté par un convoyeur à raclettes 10 ayant une forte inclinaison (de l'ordre de 45°) dont l'extrémité inférieure est placée à l'aplomb de l'extrémité de sortie d'un tambour-sécheur-enrobeur 12 assurant une production continue d'enrobés bitumineux.

Les enrobés bitumineux sont transportés jusqu'à l'extrémité supérieure du convoyeur à raclettes 10 qui est située sensiblement au-dessus du niveau supérieur des ouvertures de remplissage des trémies de stockage 4 et 5.

La partie supérieure du convoyeur incliné 10 est en appui par l'intermédiaire de barres d'appui 13, sur une structure horizontale 14 fixée au-dessus de l'ensemble de trémies et au niveau de leurs ouvertures de remplissage. Le châssis du convoyeur 10 comporte, à son extrémité supérieure, une partie horizontale 15 sur laquelle est fixée une trémie antiségrégation 16 dont l'ouverture est commandée de manière cyclique. Une goulotte 17 assure le passage des enrobés transportés par le convoyeur à raclettes 10 dans la trémie antiségrégation 16. La zone de l'installation située à l'aplomb de la trémie antiségrégation 16 constitue la zone de chargement dans laquelle vient se placer une trémie navette mobile 20 destinée à recevoir la charge d'enrobés bitumineux déversés par la trémie 16, à un instant déterminé.

Le remplissage des trémies de stockage 4 et 5 est assuré par la trémie navette 20, de la manière qui sera décrite plus loin.

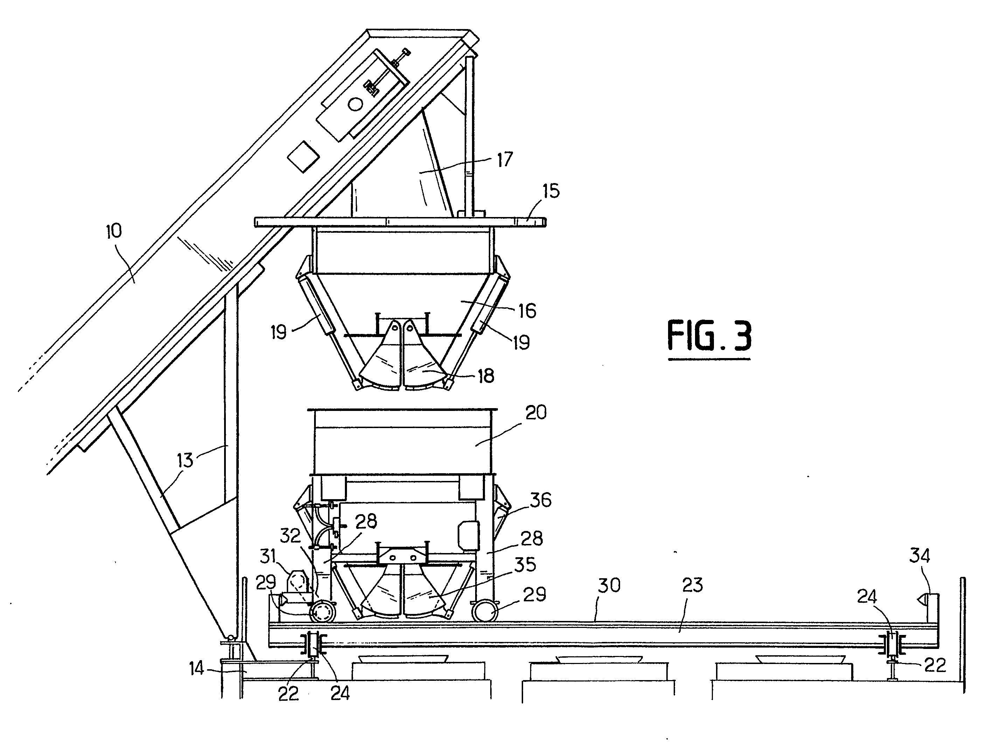

Sur la figure 3, on voit que la trémie antiségrégation 16 comporte une partie de déversement 18 constituée sous la forme de demi-casques mobiles qui peuvent être actionnés par un vérin 19.

Une commande programmée de l'alimentation des vérins 19 permet d'ouvrir la partie de déversement 18 de la trémie 16 à un instant déterminé puis de refermer cette partie 18, après déversement des enrobés dans la trémie navette 20.

Le support et le déplacement de la trémie navette 20, au-dessus du niveau supérieur des trémies de stockage 4 et 5 sont assurés par un dispositif du type pont roulant comportant une première voie de roulement constituée par deux rails parallèles 22 disposés suivant la direction des lignes de trémies 1, 2 et 3. Les rails 22 sont disposés au-dessus des lignes de trémies 1 et 3 respectivement et vers l'extérieur de ces lignes de trémies de manière à ménager entre elles une surface accessible comportant l'ensemble des ouvertures de remplissage des trémies 4 et 5.

Une poutre roulante 23 est montée mobile sur les rails 22, grâce à des galets 24. La poutre 23 peut être déplacée suivant toute la longueur des rails 22, dans un sens et dans l'autre grâce à des dispositifs moteurs accouplés aux galets 24.

La poutre 23 est réalisée sous la forme d'une ossature comportant deux longerons 25 et quatre traverses 26 disposées de manière à laisser dégagées les ouvertures de remplissage des trémies 4 et 5, lors du déplacement de la poutre 23 le long des rails 22 pour venir en position de remplissage d'une rangée de trémies 4 ou 5 perpendiculaire aux lignes 1, 2 et 3.

Comme il est visible sur la figure 3, la trémie 20 comporte une structure de support constituée par des colonnes 28 solidaires du corps de la trémie à leur partie supérieure et portant chacune un galet de roulement 29 à son extrémité inférieure.

La trémie navette 20 est montée mobile sur la poutre 23, dans la direction transversale des rangées de trémies, grâce aux galets 29 venant reposer sur des rails 30 solidaires de la partie supérieure des longerons 25 de la poutre 23. Un galet de roulement 29 de la trémie navette 20 est entraîné en rotation, par l'intermédiaire d'une chaîne d'entraînement 32 et d'un pignon à chaîne, par un moteur électrique 31 fixé sur la structure de la trémie navette 20.

De ce fait, la trémie navette 20 est susceptible de se déplacer dans la direction transversale, suivant la longueur de la poutre 23 entre deux butées d'extrémité 34.

La trémie navette 20 comporte à sa partie inférieure, un dispositif de déversement constitué par deux demi-casques 35 dont chacune des parties pivotantes est actionnée par un vérin d'ouverture et de fermeture 36.

Le fonctionnement du dispositif selon l'invention est le suivant.

Pour son chargement, la trémie navette 20 est placée dans la zone de chargement 40, à l'aplomb de la première trémie 4a de la ligne de chargement 3. Le dispositif de déversement 35 de la trémie est dans sa position de fermeture comme représenté sur la figure 3. L'ouverture de la trémie antiségrégation 16 est assurée par commande des vérins 19, lorsque cette trémie renferme une quantité prédéterminée d'enrobés déversés par le convoyeur à raclette 10, cette quantité d'enrobés venant se déverser dans la trémie navette 20.

Il est également possible de prévoir une commande assurant une ouverture cyclique de la trémie antiségrégation 16 à des intervalles de temps prédéterminés. La trémie antiségrégation 16 est alors refermée par actionnement des vérins 19 et on assure le déplacement de la trémie navette 20 pour venir la placer exactement à l'aplomb de l'ouverture de remplissage d'une trémie 4 ou 5 dans laquelle peut être effectué le déversement d'enrobés.

Pour celà, on assure le déplacement de la poutre 23 grâce aux galets motorisés 24 jusqu'au moment où cette poutre occupe une position centrale sur la rangée perpendiculaire aux lignes de trémies, sur laquelle se trouve la trémie dont on veut assurer le remplissage.

La trémie navette 20 est alors déplacée grâce aux galets motorisés 29 jusqu'au moment où cette trémie se trouve placée exactement à l'aplomb de l'ouverture de remplissage de la trémie de stockage dans laquelle on désire effectuer le déversement. Il est bien évident qu'on peut effectuer simultanément le déplacement longitudinal de la poutre 23 et le déplacement transversal de la trémie navette 20 ou encore effectuer le déplacement de la trémie navette sur la poutre 23 puis le déplacement de la poutre 23 sur les rails 22.

Dans tous les cas, le déplacement de la trémie navette 20 pour la mettre en position de déversement au-dessus d'une ouverture de remplissage d'une trémie de stockage peut être réalisé de manière extrêmement sûre et extrêmement rapide.

Lorsque la trémie navette 20 est dans sa position de déversement, les vérins 36 sont actionnés dans le sens de l'ouverture des parties mobiles des demi-casques 35.

Il est possible d'effectuer un remplissage systèmatique des trémies de stockage, suivant un ordre déterminé ou encore assurer le réapprovisionnement des trémies 4 ou 5 suivant les besoins, en fonction de la fréquence de passage des camions sur les différentes lignes de chargement 1, 2 et 3.

Il est bien évident que le remplissage de la trémie 4a située à l'aplomb de la zone de chargement 40 peut être effectué sans déplacement de la trémie navette 20.

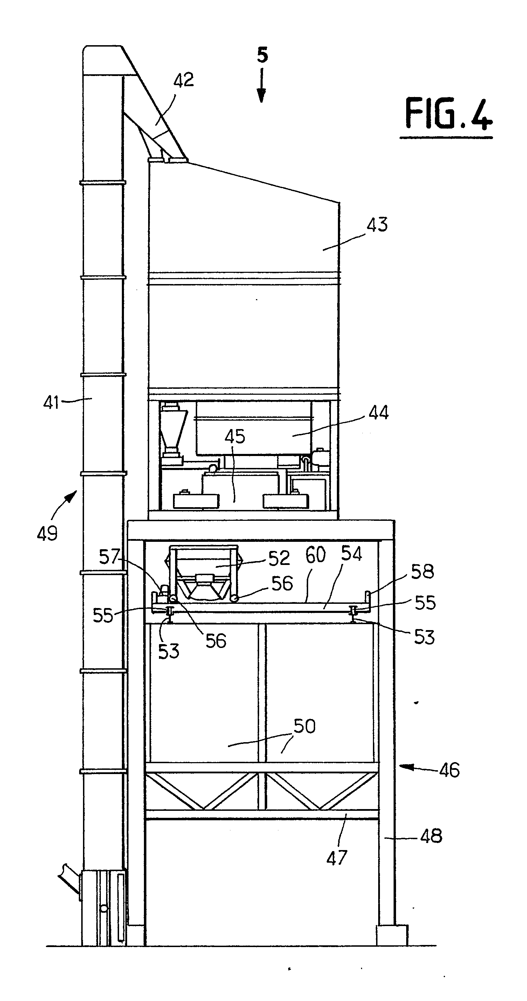

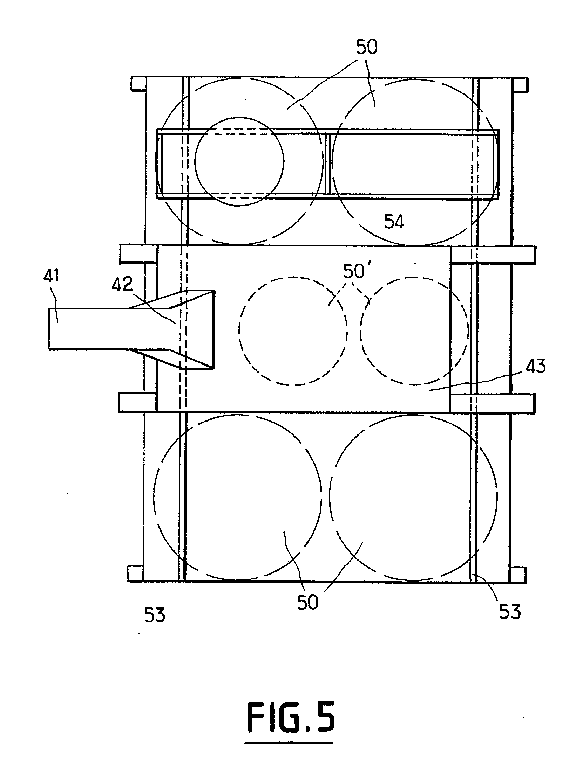

Sur les figures 4 et 5, on voit un dispositif d'alimentation suivant l'invention et suivant un second mode de réalisation, dans le cas d'un poste d'enrobage de type discontinu.

Le poste d'enrobage comporte, comme il est visible sur la figure 4, une tour de malaxage désignée de manière générale par le repère 49 et constituée par un élévateur à godets sensiblement vertical 41 comportant, à sa partie supérieure, une goulotte de déversement 42 dans une trémie de stockage de granulats 43. La trémie 43 comporte une partie inférieure de décharge et de dosage 44 permettant d'alimenter un malaxeur 45 également alimenté en bitume liquide et réalisant le mélange et le malaxage des granulats et du bitume liquide en quantités dosées.

Les granulats introduits dans le malaxeur sont constitués par un mélange de cailloux et de matériaux à fine granulométrie dont le degré d'humidité et la température permettent de faciliter l'enrobage dans le malaxeur 45.

Ces granulats sont généralement amenés par l'élévateur à godets 41 depuis une installation de séchage et de prémélange susceptible de fournir un matériau ayant une bonne homogénéité.

L'ensemble de la trémie de stockage 43 et du malaxeur 45 est fixé sur la partie supérieure d'une structure verticale 46 comportant des colonnes 48 et un ensemble de support 47 des trémies de stockage 50 du dispositif d'alimentation.

Entre les colonnes 48 et en-dessous de l'ensemble de support 47 est ménagée une voie de passage de hauteur suffisante pour assurer le passage des camions dont on assure le chargement à partir des trémies 50, disposées suivant deux lignes de chargement.

Le dispositif d'alimentation comporte six trémies de stockage 50 dont quatre trémies à grande capacité (par exemple 50 ou 80 tonnes) et deux trémies à faible capacité 50' (par exemple des trémies de 25 tonnes).

Les trémies à faible capacité 50' sont disposées à l'aplomb de la trémie 43 de la tour de malaxage, l'une de ces deux trémies se trouvant exactement à l'aplomb de l'ouverture de décharge du malaxeur 45. La zone correspondante de l'installation constitue la zone de chargement dans laquelle vient se placer une trémie navette mobile 52 destinée à recevoir la charge d'enrobés bitumineux déversée par le malaxeur 45 à un instant déterminé. Les enrobés sont préparés par gâchées dans le malaxeur 45 qui déverse sa charge d'une manière périodique dans la trémie navette 52.

Le remplissage des trémies de stockage 50 et 50' est assuré par la trémie navette 52, d'une manière analogue à celle décrite plus haut en ce qui concerne le dispositif décrit et représenté sur les figures 1, 2 et 3.

Le support et le déplacement de la trémie navette 52 au-dessus du niveau supérieur des trémies de stockage 50 et 50' sont assurés par un dispositif du type pont roulant comportant une première voie de roulement constituée par deux rails parallèles 53 disposés suivant la direction de la ligne de trémies. Les rails 53 sont disposés au-dessus des trémies de stockage 50 et vers l'extérieur, de manière à ménager entre elles une surface accessible comportant l'ensemble des ouvertures de remplissage des trémies 50 et 50'.

Une poutre roulante 54 est montée mobile sur les rails 53, grâce à des galets 55. La poutre 54 peut être déplacée suivant toute la longueur des rails 53, dans un sens et dans l'autre, grâce à des dispositifs moteurs accouplés aux galets 55.

La poutre 54 est réalisée sous la forme d'une ossature comportant deux longerons et trois traverses disposées de manière à laisser dégagées les ouvertures de remplissage des trémies 50 et 50', lors du déplacement de la poutre 54 le long des rails 53 pour venir en position de remplissage d'un ensemble de deux trémies 50 ou 50'.

Comme dans le cas du mode de réalisation décrit précédemment en regard de la figure 3, la trémie 52 comporte une structure de support constituée par des colonnes solidaires du corps de la trémie à leur partie supérieure et portant chacune un galet de roulement 56 à son extrémité inférieure.

La trémie navette 52 est montée mobile sur la poutre 54 dans la direction transversale des rangées de trémies, grâce aux galets 56 venant reposer sur des rails 60 solidaires de la partie supérieure des longerons de la poutre 54. Un galet de roulement 56 de la trémie navette 52 est entraîné en rotation par un moteur électrique 57 fixé sur la structure de la trémie 52.

De ce fait, la trémie navette 52 est susceptible de se déplacer dans la direction transversale suivant la longueur de la poutre 54 entre deux butées d'extrémité 58.

La trémie navette 52 comporte, à sa partie inférieure, un dispositif de déversement comportant des parties pivotantes actionnées par un vérin d'ouverture et de fermeture.

Pour son chargement, la trémie navette 52 est placée dans la zone de chargement, en-dessous de l'ouverture de déchargement du malaxeur 45 et à l'aplomb de l'une des trémies 50'.

Les granulats chauffés, séchés et prémélangés sont introduits en quantité dosée dans le malaxeur 45 qui réalise par mélange avec le bitume une gâchée de produits enrobés. Lorsque l'enrobage est réalisé, cette gachée est déversée dans la trémie navette 52 en position dans la zone de chargement.

On assure alors le déplacement de la trémie navette 52 pour venir la placer exactement à l'aplomb de l'ouverture de remplissage d'une trémie 50 ou 50' dans laquelle peut être effectué le déversement de la charge d'enrobés.

Pour celà, on assure le déplacement de la poutre 54, grâce aux galets motorisés 55, jusqu'au moment où cette poutre occupe une position centrale sur la rangée perpendiculaire aux lignes de trémies, sur laquelle se trouve la trémie dont on veut assurer le remplissage.

La trémie navette 52 est alors déplacée grâce aux galets motorisés 56 jusqu'au moment où cette trémie se trouve placée exactement à l'aplomb de l'ouverture de remplissage de la trémie de stockage dans laquelle on désire effectuer le déversement. Il est bien évident qu'on peut effectuer simultanément le déplacement longitudinal de la poutre 54 et le déplacement transversal de la trémie navette 52 ou encore effectuer le déplacement de la trémie navette sur la poutre 54 puis le déplacement de la poutre 54 sur les rails 53.

Dans tous les cas, le déplacement de la trémie navette 52 pour la mettre en position de déversement au-dessus d'une ouverture de remplissage d'une trémie de stockage peut être réalisé de manière sûre et rapide.

Lorsque la trémie navette 52 est dans sa position de déversement, les vérins de manoeuvre de sa partie ouvrante sont actionnés dans le sens de l'ouverture.

Il est possible d'effectuer comme dans le cas du premier mode de réalisation un remplissage systématique des trémies de stockage suivant un ordre déterminé ou encore assurer le réapprovisionnement des trémies 50 et 50' suivant les besoins, en fonction de la fréquence de passage des camions sur les lignes de chargement.

Il est bien évident que le remplissage de la trémie 50' située à l'aplomb de la zone de chargement peut être effectué sans déplacement de la trémie navette 52.

Le dispositif suivant l'invention présente les principaux avantages suivants :

- il présente un faible encombrement dans la direction verticale, toutes les trémies ayant leur extrémité supérieure située au même niveau,

- il présente un encombrement au sol relativement réduit même dans le cas d'un très grand nombre de trémies ayant des capacités et des diamètres différents,

- il est possible d'augmenter le nombre de trémies du dispositif sans que ce dispositif devienne plus complexe en ce qui concerne sa construction et son fonctionnement,

- il consomme peu d'énergie pour le déplacement de la poutre et de la trémie navette,

- son fonctionnement et sa commande sont simples,

- il ne comporte pas de pièces d'usure telles que des paliers assurant la rotation d'un organe de masse importante,

- enfin, son prix de revient est faible compte tenu des avantages qu'il présente.

L'invention ne se limite pas aux modes de réalisation qui ont été décrits.

C'est ainsi qu'on peut imaginer un dispositif suivant l'invention comportant un nombre quelconque de lignes de chargement comportant chacune un nombre quelconque de trémies. Les éléments constitutifs du dispositif du type pont roulant assurant le déplacement de la trémie navette peuvent être réalisés sous une forme différente. La motorisation de ces éléments peut elle-même être réalisée par des moyens quelconques.

Les trémies peuvent être simplement juxtaposées et les rails longitudinaux de déplacement de la poutre peuvent être fixés directement sur les parties supérieures de ces trémies disposées au même niveau. Il est également possible de concevoir une structure assurant la liaison des trémies entre elles et le support des rails longitudinaux du dispositif du type pont roulant.

Enfin, le dispositif suivant l'invention peut être utilisé pour assurer l'alimentation de trémies de stockage en un produit granulaire différent d'un produit enrobé bitumineux et par exemple, pour assurer l'alimentation de trémies de stockage en un produit tel que le sable ou des cailloux de différentes granulométries.

## Revendications

1.- Dispositif d'alimentation d'une pluralité de trémies de stockage (4, 5, 50, 50') en produits granulaires comportant un moyen d'alimentation en produits granulaires (10, 16, 45) comprenant une partie de décharge située au-dessus du niveau supérieur des trémies de stockage (4, 5, 50, 50') et une trémie navette (20, 52) mobile entre une position de remplissage (40) en-dessous de la partie de décharge du moyen d'alimentation (10, 16, 45) et une pluralité de positions de déversement situées chacune au-dessus d'une trémie de stockage (4, 5, 50, 50'), caractérisé par le fait :

- que les trémies de stockage (4, 5, 50, 50') sont disposées suivant au moins deux lignes de chargement (1, 2, 3) parallèles entre elles comprenant chacune au moins deux trémies de stockage (4, 5, 50, 50') et comportent des ouvertures supérieures de remplissage qui sont toutes placées à un même niveau,

et que le dispositif comporte un ensemble de support et de déplacement de la trémie navette (20, 52) du type pont roulant constitué par :

- une première voie de roulement horizontale (22, 53) disposée suivant la direction des lignes de chargement (1, 2, 3) et sensiblement sur toute leur longueur, à un niveau situé au-dessus des ouvertures de remplissage des trémies de stockage (4, 5, 50, 50'),

- une poutre (23, 54) disposée transversalement au-dessus de l'ensemble des lignes de chargement (1, 2, 3), montée mobile sur la première voie de roulement (22) et comportant des moyens moteurs pour le déplacement longitudinal de la poutre (23, 54),

- et une seconde voie de roulement (30, 60) disposée sensiblement sur toute la longueur de la poutre (23, 54) sur laquelle la trémie navette (20, 52) est montée mobile, grâce à des moyens de roulement (29, 56) et à des moyens moteurs (31, 32, 57) de déplacement transversal.

2.- Dispositif d'alimentation suivant la revendication 1, caractérisé par le fait que le moyen d'alimentation en produits granulaires est constitué par un convoyeur incliné (10) ayant une extrémité inférieure à un niveau situé en-dessous des ouvertures supérieures des trémies de stockage (4, 5) et une extrémité supérieure à un niveau situé au-dessus des ouvertures de remplissage des trémies à laquelle est fixée une trémie intermédiaire.

3.- Dispositif d'alimentation suivant la revendication 2, dans le cas où le produit granulaire est constitué par un enrobé bitumineux et le convoyeur incliné, par un convoyeur à raclettes de transport d'enrobés bitumineux depuis la sortie d'un tamboursécheur-enrobeur (12) jusqu'à un point situé au-dessus des ouvertures de remplissage des trémies de stockage (4, 5), caractérisé par le fait que la trémie intermédiaire (16) fixée à l'extrémité supérieure du convoyeur (10) est une trémie anti-ségrégation à ouverture cyclique.

4.- Dispositif d'alimentation suivant la revendication 1, caractérisé par le fait que le moyen d'alimentation en produits granulaires est constitué par une tour de malaxage (49) comportant une trémie de stockage de granulats séchés et chauffés (43), un dispositif de déchargement et de dosage (44) et un malaxeur (45) alimenté en granulats par le dispositif de dosage (44) et en bitume et comportant un moyen de déchargement d'enrobés bitumineux constituant la partie de décharge du moyen d'alimentation.

5.- Dispositif d'alimentation suivant la revendication 4, caractérisé par le fait que la trémie de stockage de granulats séchés et chauffés (43) et le malaxeur (45) sont fixés sur la partie supérieure d'une structure verticale (46) portant les trémies de stockage (50, 50') et que le moyen d'alimentation en produits granulaires comporte un élévateur à godets (41) d'alimentation de la trémie (43) en granulats séchés et chauffés.

6.- Dispositif d'alimentation suivant l'une quelconque des revendications 1 à 5, caractérisé par le fait que la première voie de roulement (22) est constituée par deux rails parallèles entre eux fixés sur la partie supérieure des trémies (4, 5, 50, 50') et situés vers l'extérieur des lignes de chargement d'extrémité (1, 3) constituées par les trémies (4, 5).

7.- Dispositif suivant l'une quelconque des revendications 1 à 6, caractérisé par le fait que la poutre (23) est constituée par une structure en forme de cadre comportant deux longerons (25) et une pluralité de traverses (26), de manière à laisser dégagées des zones de la poutre disposées au-dessus de la partie centrale des lignes de remplissage (1, 2, 3) des trémies (4, 5).

8.- Dispositif d'alimentation suivant l'une quelconque des revendications 1 à 7, caractérisé par le fait que les trémies sont fixées à la partie supérieure de portiques permettant le passage de camions, en-dessous des trémies (4, 5, 50, 50') suivant des lignes de chargement (1, 2, 3).

9.- Dispositif d'alimentation suivant l'une quelconque des revendications 1 à 8, caractérisé par le fait qu'il comporte trois lignes de chargement (1, 2, 3) suivant chacune desquelles sont disposées quatre trémies (4, 5).

10.- Dispositif d'alimentation suivant la revendication 9, caractérisé par le fait que deux au moins des trémies (4, 5) disposées suivant une ligne de chargement (1, 2, 3) présentent des sections de diamètres différents.

**FIG.1**

FIG.2

EP 0 381 545 A1

FIG. 3

# FIG.4

FIG.5

Office européen
des brevets

# RAPPORT DE RECHERCHE EUROPEENNE

Numero de la demande

EP 90 40 0073

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 005 004 (BODEWEI) <br> * page 3, ligne 22 - page 4, ligne 25; figures 1,2 * <br> --- | 1,2,6,8 | B 65 G 65/32 |
| A | AT-B- 107 909 (STETTINER CHAMOTTE-FABRIK) <br> * page 2, lignes 3-19; figures 1,2 * <br> --- | 1,5,6 | |
| A | DE-C- 967 364 (DIDIER-WERKE) <br> * page 2, lignes 37-65; figures 1,2 * <br> ----- | 1,2,9 | |

DOMAINES TECHNIQUES RECHERCHES (Int. Cl.5)

B 65 G

Le présent rapport a été établi pour toutes les revendications

| Lieu de la recherche | Date d'achèvement de la recherche | Examinateur |
|---|---|---|
| BERLIN | 11-04-1990 | SIMON J J P |

EPO FORM 1503 03.82 (P0402)